Europäisches Patentamt

European Patent Office

Office européen des brevets

(19)

(11) Veröffentlichungsnummer: **0 057 658**
**B1**

(12) EUROPÄISCHE PATENTSCHRIFT

(45) Veröffentlichungstag der Patentschrift:
11.07.84

(21) Anmeldenummer: **82730006.2**

(22) Anmeldetag: **25.01.82**

(51) Int. Cl.³: **H 04 M 1/02**

(54) Kompaktfernsprechapparat.

(30) Priorität: **29.01.81 DE 3103368**

(43) Veröffentlichungstag der Anmeldung:
**11.08.82 Patentblatt 82/32**

(45) Bekanntmachung des Hinweises auf die Patenterteilung:
**11.07.84 Patentblatt 84/28**

(84) Benannte Vertragsstaaten:
**AT DE FR GB IT NL SE**

(56) Entgegenhaltungen:
**DE - A - 1 512 798**
**GB - A - 12 135**
**US - A - 2 918 539**

(73) Patentinhaber: **ELMEG Elektro-Mechanik GmbH,**
**Vöhrumer Strasse 30, D-3150 Peine (DE)**

(72) Erfinder: **Sommer, Kurt, Ing.-grad., Amselsteg 2,**
**D-3202 Bad Salzdetfurth (DE)**

(74) Vertreter: **Christiansen, Henning, Dipl.-Ing., Unter den**
**Eichen 108a, D-1000 Berlin 45 (DE)**

EP 0 057 658 B1

**Beschreibung**

Die Erfindung betrifft einen Kompaktfernsprechapparat der im Oberbegriff des Anspruchs 1 angegebenen Art.

Mit der zunehmenden Mikrominiaturisierung von elektronischen Bauelementen besteht auch in der Fernsprechtechnik die Möglichkeit, die Baugrösse von Gehäusen mehr und mehr zu verkleinern. Dabei können die zur Erzeugung von Wählsignalen und zum Verbindungsaufbau notwendigen Schaltmittel zusammen mit dem Wekker und den elektroakustischen Wandlern in einem kompakten Gehäuse untergebracht werden, welches die Form eines üblichen Handapparates (Telefonhörers) hat.

Bei einem aus der GB-A-12 135 A.D.1911 bekannten Fernsprechapparat ist eine Auflagefläche vorgesehen, welche in Ruhestellung des Fernsprechers zum Abstellen desselben auf einer ebenen Tisch- oder ähnlichen Fläche bildet. Da das Abstellen des Fernsprechers auf der Auflagefläche dem «aufgelegten» Zustand entspricht, wird ein «Abheben» dadurch bewirkt, dass der Fernsprecher von der Unterlage emporgehoben wird, so dass das Fühlelement von der Aufstellfläche freikommt und den dem Gabelumschalter entsprechenden Schalter aktiviert.

Bei einem derartigen Kompaktfernsprecher besteht der Nachteil, dass – wie bei einem Fernsprechtischapparat – eine als Unterlage dienende Fläche zur Verfügung stehen muss. Vielfach wird deshalb eine hängende, beispielsweise an einer Wand anbringbare, Ausführung eines Fernsprechers gewünscht, der in seiner Ruhestellung keine Stellfläche beansprucht, da letztere unter anderem den Arbeitsbereich auf der Tischfläche eines Schreibplatzes beschränkt.

Bei der vorbekannten Ausführung ist zwar auch vorgeschlagen worden (Seite 5, Zeilen 7 bis 15), den Fernsprechapparat so auszubilden, dass er an einem Haken oder dergleichen aufgehängt werden kann. Diese Möglichkeit stellte jedoch ausschliesslich eine alternative Ausführung dar, die nicht als Standapparat funktioniert.

Der in Anspruch 1 angegebenen Erfindung liegt die Aufgabe zugrunde, einen derartigen Kompaktfernsprechapparat anzugeben, welcher wahlweise als Tischapparat oder hängend, beispielsweise als Wandapparat benutzbar ist, ohne dass konstruktive Änderungen erforderlich sind. Damit ist dem Benutzer die Möglichkeit gegeben, für den Fernsprechapparat auch unterschiedliche Aufbewahrungsorte zwischen Gesprächen zu wählen. Werden mit kurzen Abständen Gespräche geführt oder eingehende Anrufe dringend erwartet, so kann der Kompaktfernsprechapparat in greifbarer Nähe auf der Arbeitsfläche abgestellt werden. Besteht diese Notwendigkeit nicht und wird stattdessen die Stellfläche anderweitig benötigt, so kann der Fernsprecher hängend aufbewahrt werden.

Der Erfindung liegt die Erkenntnis zugrunde, dass beim Aufhängen des Fernsprechers und Betätigung des dem Gabelumschalter entsprechenden Schalter durch ein Aufhängeelement letzteres im wesentlichen eine Bewegung in derselben Richtung ausführen muss, wie das Fühlelement in der Auflagefläche des Kompaktfernsprechapparats.

Bei vorteilhaften Weiterbildungen der Erfindung, die in den Unteransprüchen angegeben sind, besteht die Möglichkeit, den Fernsprecher in seiner Betriebsweise jeweils so umzustellen, dass er bei Aktivierung des dem Gabelumschalter entsprechenden Schalters durch das Aufhängeelement ohne weiteres auf einerTischplatte abgestellt werden kann, ohne dass eine Unterbrechung des Gesprächs eintritt. Die Umstellung kann dabei ohne besondere Hilfsmittel direkt vom Benutzer vorgenommen werden.

Weiterhin kann in diesem Fall auch noch die Möglichkeit vorgesehen sein, dass eine Freisprecheinrichtung in Funktion tritt, welche eine Aufrechterhaltung der Sprechverbindung ermöglicht, ohne dass der Fernsprecher im Bereich des Kopfes der Bedienungsperson festgehalten wird. Herbei erfolgt bevorzugterweise eine elektrische Verknüpfung der Betätigungen von Fühl- und Aufhängeelement.

Bei der konstruktiven Gestaltung eines derartigen Kompaktfernsprechers unter Ausnutzung der erfindungsgemässen Lehre besteht relativ grosse Freiheit. Das Fühlelement kann bevorzugt auch in einer Stirn- oder Seitenfläche des Fernsprechers angebracht werden, wenn dies die gewählte Auflagefläche im Ruhezustand ist, wobei eine Übertragung der Kräfte zur Betätigung des dem Gabelumschalter entsprechenden Schalters über mechanische Umlenkmittel oder logische Verknüpfungen mit elektronischen Bauelementen herstellbar ist. Damit kann den unterschiedlichsten Designvorstellungen entsprochen werden.

Besonders günstig sind weiterhin Ausführungen, bei denen das zusätzliche Aufhängeelment nicht aus dem Gehäuse des Fernsprechers hervorragt, sondern in das Gehäuse einbezogen ist sowie eine Ausführung mit einem die Standsicherheit des Fernsprechers bei vertikaler Aufstellung erhöhenden, ausziehbaren die Standfläche vergrössernden Elements, bevorzugt in Form eines Bügels, welcher mit dem Ein- bzw. Ausfahren gleichzeitig mindestens einzelne der notwendigen Umstellungen vornimmt, die beim Verändern des Betriebs des Kompaktfernsprechers vom Wand- zum Tischapparat und umgekehrt auszuführen sind. Dabei handelt es sich bevorzugt um das Arretieren bzw. Freigeben von Fühl- und/oder Aufhängeelement bzw. von damit verbundenen Teilen.

Vorteilhafte Ausführungsbeispiele der Erfindung sind – in verschiedenen Varianten – in den Figuren dargestellt und werden nachfolgend näher beschrieben. Es zeigen:

Figur 1 ein erstes einfaches Ausführungsbeispiel der Erfindung, bei der Fühl- und Aufhängeelement gleichzeitig in Betrieb sind.

Figur 2 ein weiteres Ausführungsbeispiel der Erfindung, bei der Fühl- und Aufhängeelement abwechselnd aktivierbar sind.

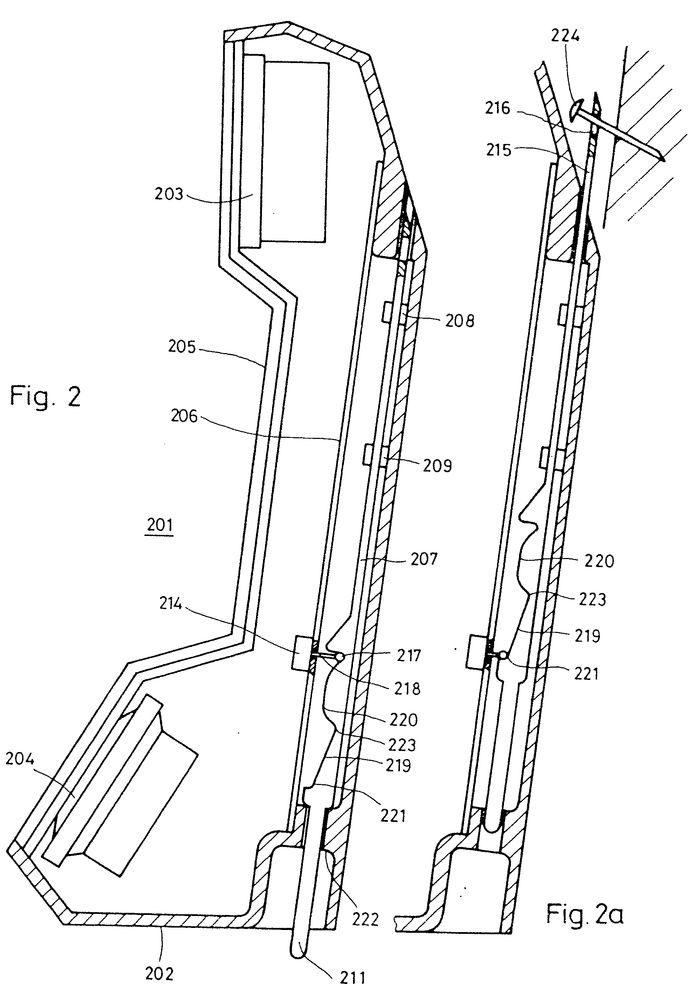

Figu 2a das Ausführungsbeispiel gemäss Figur 2 in einer alternativen Betriebsstellung.

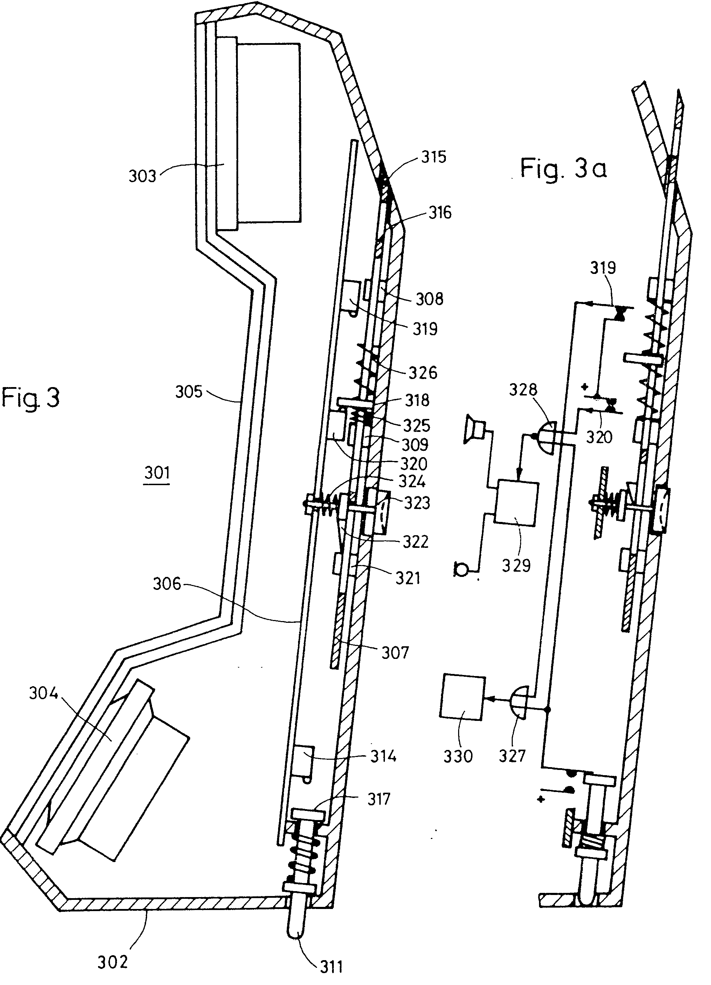

Figur 3 ein weiteres Ausführungsbeispiel der Erfindung, bei der das Fühlelement wechselweise auch zum Betätigen einer Freisprecheinrichtung dienen kann.

Figur 3a eine ergänzende Teildarstellung der Ausführung gemäss Figur 3.

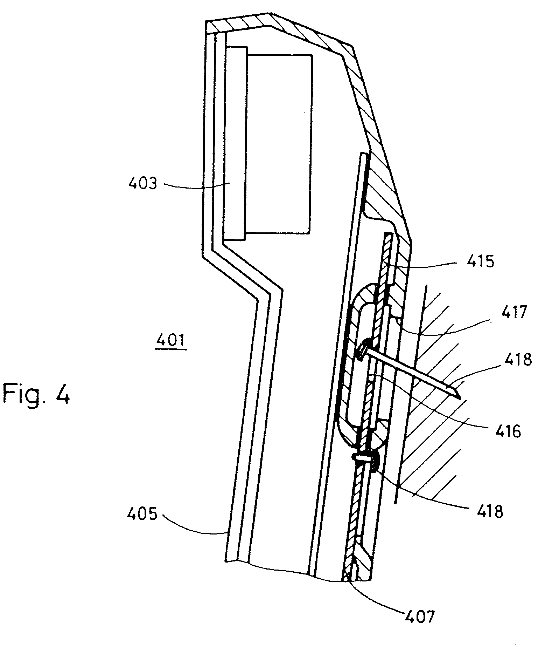

Figur 4 eine Ausführungsvariante des Aufhängeelmentes.

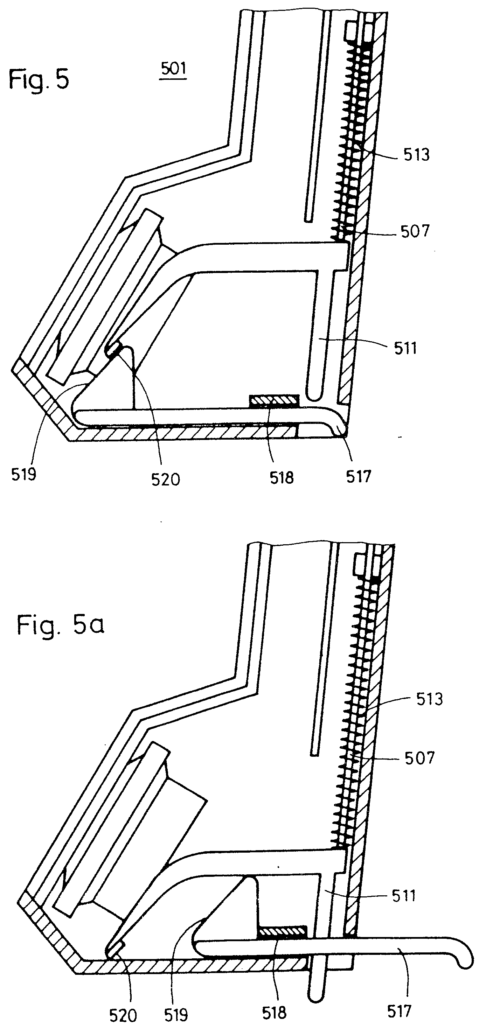

Figur 5 eine weitere Ausführungsvariante der Erfindung mit einem die Standfestigkeit erhöhenden Element und

Figur 5a die Ausführungsvariante gemäss Figur 5 in der alternativen Betriebsstellung.

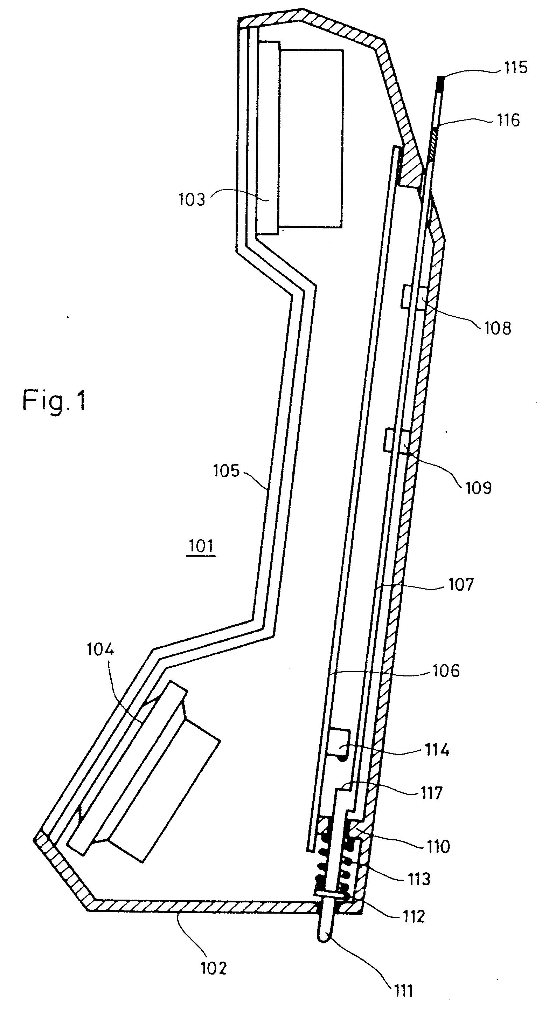

Bei der in Figur 1 in schematischer Schnittdarstellung wiedergegebenen ersten Ausführungsform des erfindungsgemässen Kompaktfernsprechers lässt sich der dem Gabelumschalter bei einem üblichen Fernsprechtischapparat entsprechende Schalter alternativ betätigen, ohne dass Umschaltungsvorgänge notwendig wären. In einem Gehäuse 101, welches mit einer Auflagefläche 102 zum Aufstellen des Fernsprechers auf einer ebenen Fläche versehen ist, sind weiterhin eine Hörkapsel 103 sowie eine Sprechkapsel 104 vorgesehen. In einer Griffebene 105 des Fernsprechers ist Raum für Wähltasten und gegebenenfalls weitere zur Bedienung des Fernsprechers notwendige Elemente, welche üblichen Ausführungen entsprechen können und in der Zeichnung nicht näher dargestellt sind. Eine zur Aufnahme der elektronischen Bauelemente dienende Leiterplatte 106 ist in der Schnittdarstellung ebenfalls sichtbar, wobei alle für das Verständnis der Erfindung nicht wesentlichen Bau- und Verbindungselemente zur Erhöhung der Übersichtlichkeit fortgelassen wurden. Innerhalb des Gehäuses des Fernsprechapparates 101 ist eine Verbindungsstange 107 vorgesehen, welche in Führungen 108 bis 110 in vertikaler Richtung verschieblich gelagert ist. Diese Schieberstange trägt an ihrem unteren Ende ein Fühlelement 11, welches aus der Auflagefläche 102 herausragt und die Verbindungsstange 107 über einen Ansatz 112 gegen die Wirkung einer Schraubenfeder 113, welche sich an der Führung 110 abstützt, nach oben bewegt.

Mit dem Hineinschieben des Fühlelementes 111 in das Gehäuse wird ein auf der Platine 106 befindlicher Schalter 114 aktiviert, welcher in seiner Funktion dem Gabelumschalter eines gewöhnlichen Fernsprechers entspricht und bei auf der Auflagefläche abgestelltem Fernsprecher die Amtsschleife unterbricht.

Die selbe Funktion wird auch dann ausgeführt, wenn der Fernsprecher an einem Aufhängeelement 115, an einem - nicht dargestellten - Haken oder Nagel aufgehängt wird, und dieser infolge des Eigengewichts des Fernsprechers über eine in dem Aufhängeelement 115 vorgesehene Öse 116 eine Kraft auf die Verbindungsstange 107 ausübt, welche den Schalter 114 wiederum entsprechend mittels des Ansatzes 117 betätigt.

Es ist ersichtlich, dass infolge der Übereinstimmung der vertikalen Bewegungsrichtung zur Aktivierung des Schalters 114 sowohl durch das Aufhängeelment 115 als auch durch das Fühlelement 113 und die Übertragung der auf diese Elemente ausgeübten Kräfte mittels eines Koppelelementes lediglich ein einziger Schalter vorgesehen sein muss, um die Gabelumschaltfunktion zu realisieren. Bei Anordnung von Fühl- bzw. Aufhängeelement an anderen Teilen des Gehäuses des Fernsprechers kann eine Kraftübertragung mittels einfacher mechanischer Übertragungs- oder Umlenkmittel (Koppelstangen, Hebel oder dgl.) entsprechend in einfacher Weise realisiert werden. Die einander entsprechenden Funktionen von Fühl- und Aufhängeelement sind dem Benutzer ohne weiteres ersichtlich bzw. ergeben sich zwangsläufig, so dass es für die Benutzung des dargestellten Fernsprechers keiner besonderen Erläuterungen bedarf.

Bei der weiteren in Figur 2 dargestellten Ausführungsform entsprechen die mit den Bezugszeichen 201 bis 209, 211 sowie 214 bis 216 in ihrer Funktion denjenigen Elementen des Ausführungsbeispiels gemäss Figur 1, die mit den entsprechenden Bezugszeichen (1-) versehen sind.

Die Verbindungsstange 207 bei dem hier dargestellten Ausführungsbeispiel ist jedoch so verkürzt, dass je nach Betriebsart des Fernsprechers (Ruhestellung hängend oder stehend) jeweils das Aufhängeelement 215 (Figur 2) oder das Fühlelement 211 (Figur 2a) vollständig im Gehäuse 201 des Fernsprechers verschwunden ist, so damit der jeweilige Betriebszustand für den Betrachter deutlich erkennbar ist und keine störenden für die derzeitige Betriebsweise des Fernsprechers nicht notwendige Elemente aus dem Gehäuse herausragen. Darüberhinaus ist ein Abstellen des Fernsprechers im «hängenden Betrieb» auch während des Gesprächs durch Betätigung des den Gabelumschalter entsprechenden Schaltes 214 stattfindet. Der Schalter 214 ist dazu bei dieser Ausführung mit einem eine Feder belastete Rolle 217 aufweisenden Betätigungsstift 218 versehen, wobei die Rolle 217 bei Verschiebung der Stange. 207 in vertikaler Richtung auf einer Steuerkurve 219 abrollt, auf deren Erhebungen 220 bzw. 221 über die Rolle 217 und den Stift 218 eine Betätigung des Schalters 214 stattfindet. Der erhabene Bereich 220 betätigt den Schalter 214, wenn der Fernsprecher bei herausragendem Fühlelement 211 auf eine Unterlage gestellt wird (eine «Betätigung» des Schalters 214 entspricht hierbei einem «Auflegen» des Hörers bei einem üblichen Fernsprechapparat).

Wird das Fühlelement 211 über diejenige Lage, in der sein Ende sich in der Ebene der Auflagefläche 202 hinaus in das Gehäuse 201 hineingeschoben, wobei dieses Hineinschieben mittels eines Fingers der Bedienungsperson erfolgen kann, der das Fühlelement 211 in eine dazu in dem Gehäuse vorgesehene Vertiefung 222 hineinschiebt, so gelangt die Rolle 217 über das Ende der Erhebung 220 hinaus in eine Senke 223, in der die Stange 207 infolge der Federbelastung der Rolle 217 eine stabile Lage einnimmt. Diese Stellung entspricht der Gesprächsbereitschaft bei hängender Ruheposition des Fernsprechers.

In Figur 2a ist die Ruhestellung des Fernsprechers 201 durch eine Teildarstellung wiedergegeben, wobei in die Öffnung 216 des Aufhängeelementes 215 ein nur zum Teil dargestellter Befestigungshaken 224 eingreift. Die Rolle 217 des Schalters 214 ist damit auf die Erhebung 221 der Steuerkurve 219 gelangt, was wiederum einer Betätigung des Schalters 214 im Sinne des aufgelegten «Zustands» entspricht. Wird der Fernsprecher von dem Haken 224 abgenommen, so wird das Aufhängeelement 215 durch den Druck der federbelasteten Rolle 217 soweit in das Gehäuse hineingezogen, bis die Rolle 217 den tiefsten Punkt 223 der Steuerkurve 219 in diesem Bereich erreicht hat. Ein Umstellen des Fernsprechers für Betrieb mit Ruhestellung im Stand wird durch einfaches Einschieben des Aufhängeelements in das Gehäuse erreicht, wobei die Rolle 217 wiederum die Erhebung 220 überwunden haben muss. Eine Veränderung der Betriebsweise ist damit durch den Benutzer ausser während des Führens von Telefongesprächen jederzeit ohne besondere Hilfsmittel möglich.

Bei der in Figur 3 dargestellten Ausführungsform stimmt die Funktion der Elemente 301 bis 307 wiederum im wesentlichen mit derjenigen der entsprechenden mit 1- bezeichneten Elemente in Figur 1 überein. Im Gegensatz zu den bisher dargestellten Ausführungen ist hier jedoch die Stange 307 nicht durchgehend ausgebildet, sondern das Aufhängeelement 315 und das Fühlelement 311 sind unabhängig voneinander betätigbar.

Während das Fühlelement 311 beim Aufsetzen des Fernsprechers auf eine Unterlage stets den Schalter 314 über seine Rückfläche 317 betätigt, tritt die Stange 307 in ihren Endlagen über einen Ansatz 318 jeweils mit einem der Schalter 319 und 320 in Wechselwirkung. Die logische Verknüpfung der Schaltfunktionen wird weiter unter anhand von Figur 3a noch näher erläutert werden, welche bei einer Darstellung des Fühlelements 311 und des Aufhängeelementes 315 in alternativen Positionen die elektrischen Funktionen der Schalter 314 sowie 319 und 320 wiedergibt.

Die Stange 307, die in einer zusätzlichen Führung 321 gelagert ist, wird in ihrer ganz in das Gehäuse des Fernsprechers 301 hineinbewegten Position mittels einer Raste 322, die sich an einem Drucktaster 323 abstützt, welcher die Raste 322 bei Betätigung gegen die Wirkung einer Schraubenfeder 324 freigibt, so dass die Stange 307 auch unter Kraftwirkung einer weiteren Schraubenfeder 325 in vertikaler Richtung nach oben bewegt wird, bis mit der sich verringernden Kraft der Schraubenfeder 325 die Kraft einer dritten Schraubenfeder 326 im Gleichgewicht steht, die sich an der Führung 308 abstützt. In dieser Stellung ist weder der Kontakt 319 noch der Kontakt 320 betätigt. Erst wenn der Fernsprecher mittels des Aufhängeelementes 315 an einem Haken aufgehängt ist, wird durch das Eigengewicht des Fernsprechers die Kraft der Feder 326 soweit überwunden und diese Feder weiter zusammengepresst, bis der Schalter 319 von dem Ansatz 318 erreicht und betätigt wird.

Figur 3a zeigt das Fühlelement 311 in der in das Gehäuse 301 hineingeschobenen Position, während das Aufhängeelement 315 aus dem Gehäuse ausgefahren, der Fernsprecher aber nicht in der aufgehängten Stellung wiedergegeben ist. Die Schalter 314, 319 und 320 sind als Kontaktfedersätze wiedergegeben, deren Ausgangssignale über ein ODER-Gatter 327 und ein NOR-Gatter 328 logisch verknüpft sind. Der hier dargestellte Fernsprecher ist mit einer zusätzlichen Freisprecheinrichtung 329 versehen, welche über das NOR-Gatter 328, dem die Ausgangssignale der Schalter 314 und 320 an seinen beiden Eingängen zugeführt werden, angesteuert wird. Weiterhin gelangen die Ausgangssignale der Schalter 314 und 319 zu den beiden Eingängen des ODER-Gatters 327, welches einen Block 330 aktiviert, der die Funktion eines Gabelumschalters beim «Abheben» ausführt.

Auf diese Weise wird die Freisprecheinrichtung 329 eingeschaltet, wenn bei herausgeschobenem Aufhängeelement 315 (entsprechend einer Betätigung der Gabelumschalterfunktion durch Aufhängen des Fernsprechers) das Fühlelement 311 betätigt, d.h. der Fernsprecher auf eine ebene Fläche gestellt wird. Damit erhält das Fühlelement 311 eine zusätzliche Funktion im Bedienungskonzept des Kompaktfernsprechers: mit dem Abstellen des Fernsprechers auf einer Fläche hat der Benutzer die Möglichkeit, das Gespräch über die Freisprecheinrichtung weiterzuführen, wobei er die Hände für andere Aktivitäten frei hat. Durch diese Funktion des Fühlstiftes 311 ist keine andere Betätigung zum Aktivieren der Freisprecheinrichtung erforderlich als ein Ausder-Hand-Stellen des Fernsprechers. Da der Sinn einer derartigen Freisprecheinrichtung gerade darin besteht, den Benutzer des Fernsprechapparates vom Halten eines Telefonhörers oder dergleichen zu entlasten, ist hiermit eine zwangsläufige und zuverlässige Schaltmöglichkeit gegeben.

Das Einschalten der Freisprecheinrichtung ist genauso logisch und sinnvoll möglich, wenn durch das eingefahrene Aufhängeelement 315 die Betriebsstellung des Fernsprechers mit stehender Ruhestellung aktiviert ist. Durch Öffnen des Schalters 320 wird dabei über das NOR-Gatter 328 eine Aktivierung der Freisprecheinrichtung 329 unterbunden, so dass ein Hineindrücken des Fühlelementes 311 durch Öffnen des Schalters 314 ausschliesslich den Block 330 zum Auslösen der Funktion «abgehoben» des dem Gabelumschalter entsprechenden Schalters aktiviert.

Soll in diesem Betriebszustand zum Freisprechbetrieb bei abgestelltem Fernsprecher übergegangen werden, muss lediglich die Taste 323 hineingedrückt werden, so dass die Stange 307 mit dem Aufhängeelement 315 ausgefahren wird. Das ausgefahrene Aufhängeelement, das bevorzugt mit einer Signalfarbe optisch gekennzeichnet ist, deutet damit dem Benutzer an, dass ein Abstellen des Fernsprechers auf einer Unterlage nunmehr ein Aktivieren der Freisprecheinrichtung zur Folge haben würde. Soll das Gespräch beendet oder geheim weitergeführt werden, so braucht lediglich die Stange 307 durch Druck auf das Aushängeelement 315 wieder in das Gehäuse hineingeschoben werden, wobei bei nicht auf einer Unterlage abgestelltem Fernsprecher die Freisprecheinrichtung unter Aufrechterhaltung der Verbindung ausgeschaltet wird, während bei abgestelltem Fernsprecher eine Beendigung des Gesprächs eintritt. Entsprechend kann in diesem Fall ein Beenden des Gesprächs auch durch Aufhängen des Fernsprechers herbeigeführt werden.

Bei der in Figur 4 wiedergegebenen Variante ist – bei im übrigen entsprechender Bezifferung der Elemente - die Öffnung 416 des Aufhängeelementes 415 durch eine in der Rückseite des Fernsprechers 401 vorgesehene Aussparung 417 zugänglich, durch die ein Haken oder Nagel 418 zum Aufhängen des Fernsprechers in die Öffnung 416 des Aufhängeelement 415 eingreifen kann. Im übrigen ist diese Variante bei allen zuvor dargestellten Ausführungsformen entsprechend verwendbar, wobei bevorzugt ein Umschalten der Betriebsfunktionen in Abhängigkeit von der Position des Aufhängeelementes durch einen Schlitz herausragendes, versenkt geführtes Betätigungselement 418 erfolgt, welches manuell verschiebbar ist. Dabei entspricht der Stellung des eingefahrenen Aufhängeelementes bei den vorangehenden Ausführungen eine Stellung, bei der die Öffnung 416 in der Stange 407 nicht durch die Aussparung 417 hindurch erreichbar ist.

In Figur 5 ist eine Variante der in Figur 2 dargestellten Ausführungsform des erfindungsgemässen Fernsprechapparates dargestellt, bei der ein in seinem aus dem Gehäuse des Fernsprechapparates 501 ausgefahrenen Zustand die Standfestigkeit vergrössernder Bügel 517 vorgesehen ist, welcher beim Einfahren der in Horizontalrichtung durch ein Element 518 geführten Stange 507 über an seinem im Inneren des Gehäuses befindlichen Endteil vorgesehene schräge Führungsfläche 519 und einen an der Stange 507 vorgesehenen Ansatz 520 beim Einfahren so einwirkt, dass bei eingeschobenem Bügel die Stange 507 vertikal nach oben verschoben (ein dort vorhandenes Aushängeelement also in seiner Betriebsposition und das Fühlelement 511 somit unwirksam ist), während bei ausgefahrenem Bügel auch das Fühlelement 511 Aufgrund der Wirkung einer Schraubenfeder 513 ausgefahren ist. Den Bügel in ausgefahrener Stellung zeigt Figur 5a. Es ist ersichtlich, dass durch die Mitnahme der Stange 507 beim Einfahren des Bügels 517 jeweils über eine vorbestimmte Wegstrecke die Beweglichkeit der Stange zum Auslösen der Betriebsfunktionen des Fernsprechers im übrigen nicht behindert ist, da beim Bewegen der Stange 507 in die Position entsprechend dem «Auflegen» stets eine nach oben gerichtete Kraft – gegen die Wirkung der Feder 513 – ausgeübt wird, die durch den mit der Führungsfläche 519 in Wechselwirkung tretenden Ansatz 320 nicht behindert wird.

## Patentansprüche

1. Kompaktfernsprechapparat in Form eines Handapparates (-01), insbesondere mit integrierten Bedienungselementen, bei dem ein Fühlelement (-11) an einer Auflagefläche vorgesehen ist, mit dem bei auf einer Unterlage abgestelltem Fernsprecher ein dem Gabelumschalter entsprechender Schalter (-14) betätigt wird, wobei das Abstellen des Fernsprechapparats auf einer Unterlage dem aufgelegten Zustand entspricht, dadurch gekennzeichnet, dass ein zusätzliches Aufhängeelement (-15) für den Fernsprechapparat (-01) vorgesehen ist, das ebenfalls mit dem dem Gabelumschalter entsprechenden Schalter (-14) in Wirkverbindung steht, wobei die Belastung des Aufhängeelementes (-15) durch das Gewicht des Fernsprechapparates dem aufgelegten Zustand entspricht.

2. Kompaktfernsprechapparat nach Anspruch 1, dadurch gekennzeichnet, dass das Fühl- und das Aufhängeelement durch mechanische und/oder elektrische Mittel funktionell verbunden sind.

3. Kompaktfernsprechapparat nach Anspruch 2, dadurch gekennzeichnet, dass die mechanische Verbindung aus einer Fühl- und Aufhängeelement verbindenden Stange (-07) besteht.

4. Kompaktfernsprechapparat nach Anspruch 1, dadurch gekennzeichnet, dass durch Bewegen des Aufhängeelementes zwischen einer Betriebs- und einer Ruheposition zusätzliche Betriebsfunktionen des Fernsprechapparates schaltbar sind.

5. Kompaktfernsprechapparat nach Anspruch 4, dadurch gekennzeichnet, dass das Schalten der Betriebsfunktion darin besteht, dass bei in seiner Betriebsposition befindlichem Aufhängeelement bei auf einer Unterlage abgestelltem Fernsprechapparat das Fühlelement (211, 311) mindestens bezüglich der Wirkverbindung zu dem dem Gabelumschalter entsprechenden Schalter ausser Funktion gesetzt ist.

6. Kompaktfernsprechapparat nach Anspruch 4, dadurch gekennzeichnet, dass die Ruheposition des Aufhängeelementes (215, 315) sich in einer in das Gehäuse des Fernsprechapparats geschobenen Position befindet.

7. Kompaktfernsprechapparat nach Anspruch 5, dadurch gekennzeichnet, dass das Aufhängeelement (415) in seiner Betriebsposition von einer Seitenfläche des Fernsprechapparats her durch eine Öffnung erreichbar und in eine Ruheposition verschiebbar ist, in der es durch einen zum Aufhängen dienenden Haken oder Nagel nicht mehr erreichbar ist.

8. Kompaktfernsprechapparat nach Anspruch 3, dadurch gekennzeichnet, dass die Verbindungsstange (207) mit mindestens zwei Rastpositionen vorgesehen ist, welche jeweils der Betriebs- und Ruheposition zugeordnet sind.

9. Kompaktfernsprechapparat nach Anspruch 8, dadurch gekennzeichnet, dass ein Schalter (214) vorgesehen ist, welcher von einer Steuerkurve (219) betätigt wird, welche mit der Verbindungsstange (207) verbunden ist, wobei durch diese Steuerkurve in Zusammenwirkung mit einem federbelasteten Schalter (214) die Stange derart angetrieben wird, das Fühlelement (211) und Aufhängeelement (215) eine Vorspannung entgegen der in der Ruhestellung des Fernsprechapparates (201) auf sie wirkenden Kräfte erhalten.

10. Kompaktfernsprechapparat nach einem der Ansprüch 8 oder 9, dadurch gekennzeichnet, dass das Fühlelement (211) in der Betriebsposition des Aufhängeelements nicht über die durch die Auflagefläche gebildete Ebene hinausragt.

11. Kompaktfernsprechapparat nach Anspruch 10, dadurch gekennzeichnet, dass das Fühlelement (211) über eine in der Auflagefläche des Fernsprechapparats vorgesehene Vertiefung (222) manuell soweit in das Gehäuse des Fernsprechapparats hineinbewegbar ist, bis das damit verbundene Aufhängeelement seine Betriebsposition erreicht.

12. Kompaktfernsprechapparat nach einem der vorangehenden Ansprüche, dadurch gekennzeichnet, dass ein ausziehbarer, in seinem ausgezogenen Zustand die Standfläche des Fernsprechapparats vergrössernder Bügel (517) vorgesehen ist.

13. Kompaktfernsprechapparat nach Anspruch 10, dadurch gekennzeichnet, dass mit dem ausziehbaren Bügel mindestens eine -Steuerkurve verbunden ist, welche beim Ein- und/oder Ausfahren ein Verschieben der das Fühlelement (511) oder das Aufhängeelement tragenden Stange (507) in verschiedene Arbeitspositionen bewirkt.

14. Kompaktfernsprechapparat nach Anspruch 5, dadurch gekennzeichnet, dass wenn sich das Aufhängeelement in seiner Betriebsposition befindet, das Fühlelement (311) bei Betätigung eine im Fernsprechapparat (301) vorgesehene Freisprecheinrichtung (329) aktiviert.

15. Kompaktfernsprechapparat nach Anspruch 14, dadurch gekennzeichnet, dass Warnmittel vorgesehen sind, welche bei in seiner Betriebsposition befindlichen Aufhängeelement und aktivierter Freisprecheinrichtung ein diesen Zustand kennzeichnendes optisches Signal freigibt.

## Claims

1. A compact telephone apparatus in the form of a handset (-01), particularly with integrated operating elements, wherein a sensing element (-11) is provided on a bearing surface and actuates a switch (-14) corresponding to the cradle switch when the telephone is put down on a support, the putting down of the telephone apparatus on a support corresponding to the hung-up state, characterised in that an additional suspension element (-15) is provided for the telephone apparatus (-01) and is likewise in operational communication with the switch (-14) corresponding to the cradle switch, the loading of the suspension element (-15) by the weight of the telephone apparatus corresponding to the hung-up state.

2. A compact telephone apparatus as claimed in claim 1, characterised in that the sensing element and the suspension element are functionally connected by mechanidal and/or electrical means.

3. A compact telephone apparatus as claimed in claim 2, characterised in that the mechanical connection consists of a rod (-07) connecting sensing element and suspension element.

4. A compact telephone apparatus as claimed in claim 1, characterised in that additional operational functions of the telephone apparatus can be controlled by moving the suspension element between an operating position and a position of rest.

5. A compact telephone apparatus as claimed in claim 4, characterised in that the control of the operational function consists in that, with the suspension element in its operating position with the telephone apparatus put down on a support, the sensing element (211, 311) is put out of operation at least with regard to its operational communication with the switch corresponding to the cradle switch.

6. A compact telephone apparatus as claimed in claim 4, characterised in that the position of rest of the suspension element (215, 315) is in a position pushed into the housing of the telephone apparatus.

7. A compact telephone apparatus as claimed in claim 5, characterised in that, in its operating position, the suspension element (415) can be reached from a lateral face of the telephone apparatus through an opening and can be pushed into a position of rest in which it can no longer be reached by a hook or nail serving for its suspension.

8. A compact telephone apparatus as claimed in claim 3, characterised in that the connecting rod (207) is provided with at least two detent positions which are assigned to the operating position and the position of rest respectively.

9. A compact telephone apparatus as claimed in claim 8, characterized in that a switch (214) is provided which is actuated by a cam (219) which is connected to the connecting rod (207), the rod being driven by this cam, in co-operation with a spring – loaded switch (214), in such a manner that sensing element (211) and suspension element (215) are given an initial stressing counter for the forces acting on them in the position of rest of the telephone apparatus (201).

10. A compact telephone apparatus as claimed in one of the claims 8 or 9, characterized in that the sensing element (211) does not project beyond the plane formed by the bearing surface in the operating position of the suspension element.

11. A compact telephone apparatus as claimed in claim 10, characterized in that the sensing element (211) can be moved manualy, via a recess (222) provided in the bearing surface of the telephone apparatus, into the housing of the telephone apparatus until the suspension element conected thereto reaches its operating position.

12. A compact telephone apparatus as claimed in one of the preceding claims, characterized in that an extensible bracket (517) is provided which enlarges the base of the telephone apparatus in its extended state.

13. A compact telephone apparatus as claimed in claim 10, characterized in that connected to the extensible bracket is at least one cam which, during the travel in and/or out, causes a displacement of the rod (507) carrying the sensing element (511) or the suspension element into different working positions.

14. A compact telephone apparatus as claimed in claim 5 is in its operating position, the seusing element, characterized in that if the suspension element (311), on being actuated, activates a hands-free device (329) provided in the telephone apparatus (301) .

15. A compact telephone apparatus as claimed in claim 14, characterized in that warning means are provided which, when the suspension element is in its operating position and the hands-free device is activated, actuate an optical signal indicating this state.

**Revendications**

1. Appareil téléphonique compact ayant la forme d'un combiné (–01), en particulier avec des éléments de service intégrés, dans lequel est prévu, sur une face de repos, un élément de détection (–11) qui, lorsque l'appareil téléphonique est posé sur un plan d'appui, manœuvre le contacteur correspondant au contacteur support du combiné d'un appareil conventionnel, le fait de poser l'appareil sur un plan d'appui correspondant à la situation «combiné raccroché», caractérisé en ce qu'il est prévu pour l'appareil téléphonique (–01) un élément de suspension supplémentaire (–15) qui agit également en liaison avec le contacteur (–14) correspondant au contacteur support du combiné, le fait que l'élément de suspension (–15) soit sollicité par le poids de l'appareil téléphonique correspondant à la situation «combiné raccroché».

2. Appareil téléphonique compact selon la revendication 1, caractérisé en ce que l'élément de détection et l'élément de suspension sont reliés fonctionnellement par des moyens mécaniques et/ou électriques.

3. Appareil téléphonique compact selon la revendication 2, caractérisé en ce que la liaison mécanique est constituée d'une tige (–07) qui relie l'élément de détection et l'élément de suspension.

4. Appareil téléphonique compact selon la revendication 1, caractérisé en ce qu'en déplaçant l'élément de suspension entre une position d'utilisation et une position de repos, on peut mettre

en œuvre des fonctions supplémentaires de l'appareil téléphonique.

5. Appareil téléphonique compact selon la revendication 4, caractérisé en ce que la mise en œuvre de la fonction, d'utilisation consiste en ce que, l'élément de suspension se trouvant, dans le cas d'un appareil téléphonique posé sur un plan d'appui, dans sa position de service, l'élément de détection (211, 311) est mis hors fonction au moins du point de vue de sa liaison avec le contacteur correspondant au contacteur support du combiné.

6. Appareil téléphonique compact selon la revendication 2, caractérisé en ce que la position de repos (position de non-utilisation) de l'élément de suspension (214, 315) correspond à la position de cet élément lorsqu'il a coulissé dans le boîtier de l'appareil téléphonique.

7. Appareil téléphonique compact selon la revendication 5, caractérisé en ce que, lorsque l'élément de suspension (415) se trouve en position de service, on peut l'atteindre par une ouverture depuis une face latérale de l'appareil et on peut le faire coulisser pour le mettre dans une position de repos dans laquelle il ne peut plus être atteint par un crochet ou un clou servant à le suspendre.

8. Appareil téléphonique compact selon la revendication 3, caractérisé en ce que la tige de liaison (207) comporte au moins deux positions de crantage qui correspondent respectivement à la position de service et à la position de repos.

9. Appareil téléphonique compact selon la revendication 8, caractérisé en ce qu'il est prévu un contacteur (214) manœuvré par un profil de commande (219) relié à la tige de liaison (207), ce profil de commande, en collaboration avec un contacteur (214) sollicité par un ressort, entraînant la tige de telle façon que l'élément de détection (211) et l'élément de suspension (215) reçoivent une précontrainte opposée aux forces qui agissent sur eux dans la position de repos de l'appareil téléphonique (201) .

10. Appareil téléphonique compact selon l'une des revendications 8 ou 9, caractérisé en ce que l'élément de détection (211), dans la position de service de l'élément de suspension, ne vient pas en saillie au-delà du plan de la face de repos de l'appareil.

11. Appareil téléphonique compact selon la revendication 10, caractérisé en ce que l'on peut repousser manuellement l'élément de détection (211), par l'intermédiaire d'un évidement (222) prévu dans la face de repos de l'appareil, suffisamment loin dans le boîtier de l'appareil pour que l'élément de suspension qui lui est lié atteigne sa position de service.

12. Appareil téléphonique compact selon l'une des revendications précédentes, caractérisé en ce qu'il est prévu un étrier (517) que l'on peut extraire et qui, une fois extrait, agrandit la face de repos de l'appareil.

13.. Appareil téléphonique compact selon la revendication 10, caractérisé en ce qu'à l'étrier, que l'on peut extraire, est relié au moins un profil de commande qui, lorsque l'on rentre et/ou l'on sort l'étrier, opère un coulissement de la tige (507) qui porte l'élément de détection (511) ou l'élément de suspension pour l'amener dans ses différentes positions de travail.

14. Appareil téléphonique compact selon l'une des revendication 5, caractérisé en ce que, lorsque l'élément de suspension se trouve en position de service, l'élément de détection (311), lorsqu'on le manœuvre, met en service un dispositif permettant de téléphoner à main libre, prévu dans l'appareil.

15. Appareil téléphonique compact selon l'une des revendication 14, caractérisé en ce qu'il est prévu un moyen de signalisation qui, lorsque l'élément de suspension se trouve dans sa position de service et le dispositif permettant de téléphoner à main libre, en service, libère un signal optique qui caractérise cet état.

Fig.1

Fig. 2

Fig. 2a

0 057 658

Fig. 3

Fig. 3a

301

13

Fig. 4

Fig. 5

501

Fig. 5a